# EUROPEAN PATENT APPLICATION

(11) **EP 4 592 670 A1**
(43) Date of publication of application: **30.07.2025**
(21) Application number: 24223361.7
(22) Date of filing: 27.12.2024
(51) Int. Cl.: G01N 21/3581, H04N 23/23, H04N 23/56

(54) **THZ-CAMERA SYSTEM, METHOD OF CONTROLLING THE THZ-CAMERA SYSTEM AND PROGRAM RECORDING MEDIUM**

(30) Priority: 24.01.2024 JP 2024008927
(71) Applicant: CANON KABUSHIKI KAISHA, Tokyo 146-8501 (JP)
(72) Inventor: NUMATA, Aihiko, Tokyo, 146-8501 (JP)
(74) Representative: TBK

(57) **Abstract**

A camera system (100) is capable of simultaneously acquiring a feature of a subject (150) while detecting a concealed article and includes a radiation unit (110) configured to radiate terahertz waves, a camera unit (120) configured to acquire a first signal at a timing at which the terahertz waves are radiated by the radiation unit (110) and acquire a second signal different from the first signal at a timing at which the terahertz waves are not radiated by the radiation unit (110), and a signal processing unit (160) configured to generate an image from the first and second signals acquired by the camera unit (110). The camera unit (120) or the signal processing unit (160) acquires a difference between the first and second signals. The signal processing unit (160) generates a first image from the difference between the first and second signals and generates a second image different from the first image from the second signal.

## Description

### BACKGROUND

### Technical Field

The present disclosure relates to a camera system, a method of controlling the camera system, and a program recording medium.

### Description of the Related Art

In recent years, inspection techniques using terahertz waves have been proposed. Terahertz waves are generally defined as electromagnetic waves that have frequencies equal to or greater than 30 GHz and equal to or less than 30 THz.

Japanese Patent Application Laid-open No. 2020-153974 proposes a camera system disposed to configure a part of a monitoring system of a facility such as a railroad and acquire an image formed with terahertz waves in order to detect a dangerous article such as a knife brought into a railroad vehicle. Specifically, the camera system is configured such that a radiation unit that radiates terahertz waves is disposed to face a camera unit that detects the terahertz waves, and components reflected from a subject are acquired among the terahertz waves radiated from the radiation unit.

In the configuration disclosed in Japanese Patent Application Laid-open No. 2020-153974, the following problem may arise. Since terahertz waves have relatively longer wavelengths than an uneven portion of the surface of a subject, the terahertz waves are subject to specular reflection without being scattered on the surface of the subject. That is, the camera unit detecting the terahertz waves can acquire only components subjected to specular reflection on the surface of the subject among the terahertz waves radiated from the radiation unit.

Therefore, the camera system is appropriate for detecting a concealed article, but it is difficult to acquire features of contours or the like of inspection targets such as human bodies or clothes that have low reflectance with respect to terahertz waves. As a result, it is difficult to acquire information regarding concealment of a concealed article in a certain portion of an inspection target.

### SUMMARY

According to embodiments of the present invention, a camera system includes: a radiation unit configured to radiate terahertz waves; a camera unit configured to acquire a first signal at a timing at which the terahertz waves are radiated by the radiation unit and acquire a second signal different from the first signal at a timing at which the terahertz waves are not radiated by the radiation unit; and a signal processing unit configured to generate an image from the first and second signals acquired by the camera unit. The camera unit or the signal processing unit acquires a difference between the first and second signals, generates a first image from the difference between the first and second signals, and generates a second image different from the first image from the second signal.

Further features of the present disclosure will become apparent from the following description of exemplary embodiments with reference to the attached drawings.

### BRIEF DESCRIPTION OF THE DRAWINGS

Fig. 1 is a diagram illustrating a camera system according to a first embodiment.
Fig. 2 is a block diagram illustrating an internal configuration of a camera control apparatus of the camera system according to the first embodiment.
Figs. 3A and 3B are diagrams illustrating two types of terahertz waves.
Fig. 4 is a block diagram illustrating a terahertz wave detection sensor according to the first embodiment.
Fig. 5 is a diagram illustrating a pixel circuit of the terahertz wave detection sensor according to the first embodiment.
Figs. 6A and 6B are diagrams illustrating a variation in a control signal according to the first embodiment.
Fig. 7 is a diagram illustrating a pixel circuit of a terahertz wave detection sensor according to a second embodiment.
Fig. 8 is a timing chart illustrating the terahertz wave detection sensor according to the second embodiment.

### DESCRIPTION OF THE EMBODIMENTS

Hereinafter, preferred embodiments of the present disclosure will be described in detail with reference to the appended drawings. Embodiments of the present disclosure are not limited to the following embodiments. The same or equivalent constituent elements, members, and processes illustrated in the drawings are denoted by the same reference signs, and repeated description thereof will be omitted. Some of the members not important in description of each drawing are not illustrated.

### First Embodiment

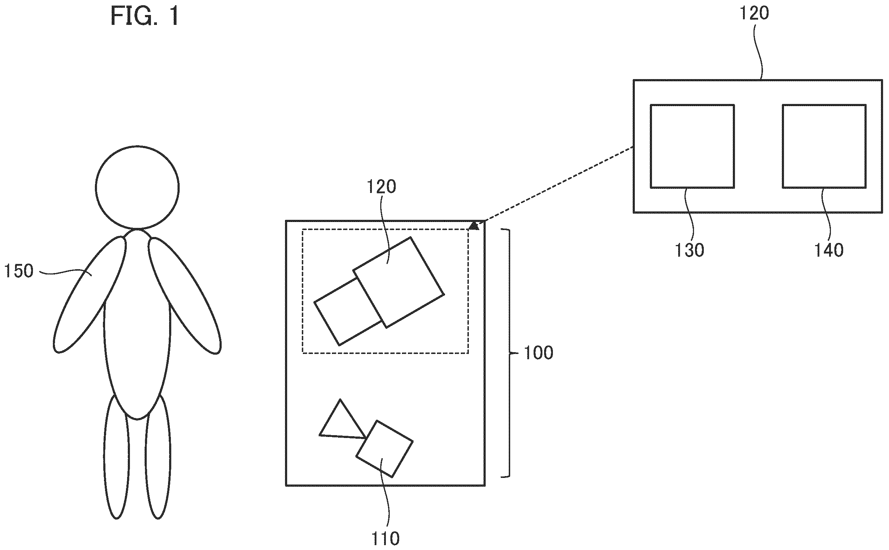

Fig. 1 is a diagram illustrating a configuration example of a camera system 100 according to the present embodiment. The camera system 100 includes a radiation unit 110, a camera unit (imaging unit) 120, and a signal processing unit 140. The camera system 100 includes a control unit (control device) (not illustrated) connected to the camera system 100 via a line. The radiation unit 110 radiates terahertz waves. The camera unit 120 detects the terahertz waves and acquires an image formed with the terahertz waves. The signal processing unit 140 generates an image from a signal with the terahertz waves detected (acquired) from the camera unit 120.

As illustrated in Fig. 1, according to the present embodiment, the radiation unit 110 is integrated with the camera unit 120. However, the present invention is not limited thereto, and the radiation unit 110 and the camera unit 120 may be formed in different casings. The signal processing unit 140 may be embedded in the camera unit 120 or may be provided outside of the camera unit 120.

The terahertz waves radiated from the radiation unit 110 are mirror-reflected from an inspection target 150 and are incident on the camera unit 120. That is, the camera unit 120 can detect the terahertz waves radiated from the radiation unit 110. The inspection target 150 is normally a person, but may be an animal or a robot other than a person.

The radiation unit 110 includes a plurality of light emitting devices (terahertz emitting devices) arranged in an array form. As the terahertz emitting device, for example, a device that includes an antenna formed by a differential negative resistance element and a resonance circuit is used. A resonant tunneling diode or the like is used as the differential negative resistance element. The radiation unit 110 may be formed by a plurality of terahertz emitting devices. Emission intensity can be increased by resonantly driving the plurality of terahertz emitting devices or terahertz waves can be radiated to the entire inspection target by arranging the light emitting devices in an array.

The camera unit 120 includes a terahertz wave detection unit 130 that detects terahertz waves. As the terahertz wave detection unit, for example, a Schottky-barrier diode, a bolometer, a MEMS resonator, or the like may be used. In the present embodiment, since it is necessary to detect terahertz waves (thermal radiation) radiated from a human body in addition to the terahertz waves radiated from the radiation unit 110 that has a terahertz light source, it is preferable to use a detection element with a wide detectable wavelength range, such as a bolometer. A circuit that reads a signal detected by the terahertz wave detection unit 130 will be described below.

The control unit (not illustrated) is configured by at least one computer that includes one or a plurality of CPUs (processors) or one or a plurality of storage media (memories) and is connected to each constituent element of the camera system 100 via a line. The control unit controls the constituent elements by transmitting control signals to the constituent elements via lines and generally controls the constituent elements of the camera system 100 according to a program stored in the memory.

The camera system 100 according to the present disclosure acquires a first signal (hereinafter referred to as an S signal) at a timing at which the terahertz waves are radiated to the inspection target 150 and acquires a second signal (hereinafter referred to as an N signal) at a timing at which the terahertz waves are not radiated to the inspection target. Then, a first image is generated from a difference between the S and N signals and a second image is generated from the N signal. According to the present embodiment, the camera unit 120 performs acquiring the S and N signals. Further, the signal processing unit 140 performs generating the first and second images.

Here, the first image is an image appropriate to detect a concealed article and the second image is an image appropriate to detect a feature such as a contour of an inspection target. Therefore, the camera system 100 according to the present embodiment can be used to simultaneously acquire a feature of a subject while detecting a concealed article. The reason for this will be described below.

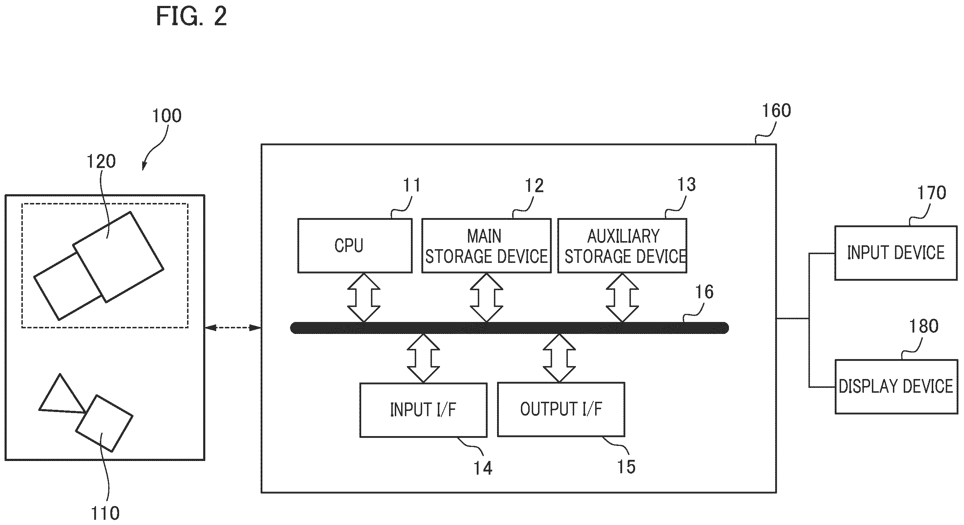

The camera system 100 is connected to a camera control apparatus 160 illustrated in Fig. 2 via a general-purpose interface such as a Universal Serial Bus (USB). Fig. 2 is a block diagram illustrating an example of an internal configuration of the camera control apparatus (information processing apparatus) 160 according to the first embodiment.

The camera control apparatus 160 is an image processing apparatus (information processing apparatus) configured with at least one computer. The camera control apparatus 160 includes a CPU 11, a main storage device 12, an auxiliary storage device 13, an input I/F 14, and an output I/F 15. The elements of the camera control apparatus 160 are connected to be able to communicate with each other via a system bus 16.

The CPU 11 is a central processing unit that generally controls an operation of the camera control apparatus 160. The CPU 11 may perform general control of the camera system 100.

The main storage device 12 is a storage device (memory) such as a random access memory (RAM) that functions as a temporal storage location of data of the CPU 11. The auxiliary storage device 13 is a storage device (storage unit) that stores data such as various programs, various types of setting data, or various parameters. The auxiliary storage device 13 is, for example, a storage device such as a hard disk drive (HDD), a read only memory (ROM), or a solid state drive (SSD). The numbers of CPUs 11, main storage devices 12, and auxiliary storage devices 13 may be plural without being limited to one.

The input I/F 14 is an interface used for the camera control apparatus 160 to receive an input (signal) from the camera system 100, an input device 170, or the like. The output I/F 15 is an interface used to output information (signal) from the camera control apparatus 160 to a display device 180 or the like.

The input device 170 is configured with a mouse, a keyboard, or the like and is manipulated by a user of the camera control apparatus 160. The display device (display unit) 180 is a device such as a monitor that displays an image received from the camera control apparatus 160.

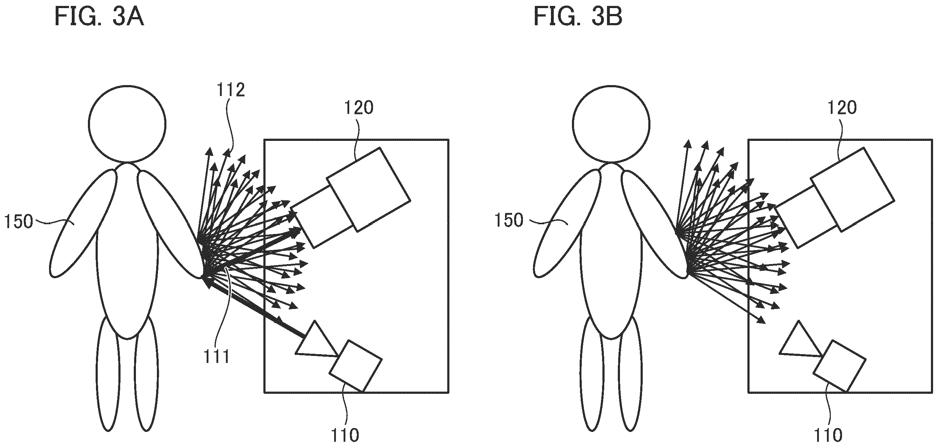

Figs. 3A and 3B are diagrams illustrating terahertz waves 111 radiated from the radiation unit 110 to the inspection target 150, specular-reflected from the inspection target 150, and incident on the camera unit 120 and terahertz waves 112 radiated from the radiation unit 110 to the inspection target 150, thermally radiated from the inspection target 150, and incident on the camera unit 120. Fig. 3A is a diagram illustrating an example of a case where the terahertz waves are radiated to the inspection target. Fig. 3B is a diagram illustrating an example of a case where the terahertz waves are not radiated to the inspection target. The thickness of an arrow in Figs. 3A and 3B indicates intensity of the terahertz waves.

As illustrated in Fig. 3A, when the terahertz waves are radiated to the inspection target, both the terahertz waves 111 and 112 are incident on the camera unit 120. When the S signal (first signal) itself is used, the terahertz waves 111 are buried in the terahertz waves 112, which makes it difficult to detect a concealed article. In the related art, to address this problem, a wavelength band limitation unit such as an antenna is provided in the terahertz wave detection unit 130, and the wavelength of the terahertz waves detected by the terahertz wave detection unit 130 is limited to a wavelength band radiated by the radiation unit 110. The camera system 100 can selectively detect only the terahertz waves 111 by providing the configuration according to the first embodiment.

On the other hand, as illustrated in Fig. 3B, when the terahertz waves are not radiated to the inspection target, only the terahertz waves 112 are incident on the camera unit 120, and thus a feature of an inspection target can be acquired. However, when an antenna is provided in the terahertz wave detection unit 130 as in the related art, an amount of thermal radiation that can be detected by the terahertz wave detection unit 130 may decrease, which makes it difficult to detect the feature of the inspection target.

Accordingly, according to the present embodiment, by causing a wavelength band limitation unit such as an antenna not to limit a wavelength band, it is possible to increase an amount of thermal radiation that can be acquired at a timing of Fig. 3B. Further, according to the present embodiment, it is possible to selectively only the terahertz waves 111 by a difference between the S signal acquired at a timing of Fig. 3A and the N signal acquired at the timing of Fig. 3B. In this configuration, a feature of a subject can be acquired simultaneously while detecting a concealed article.

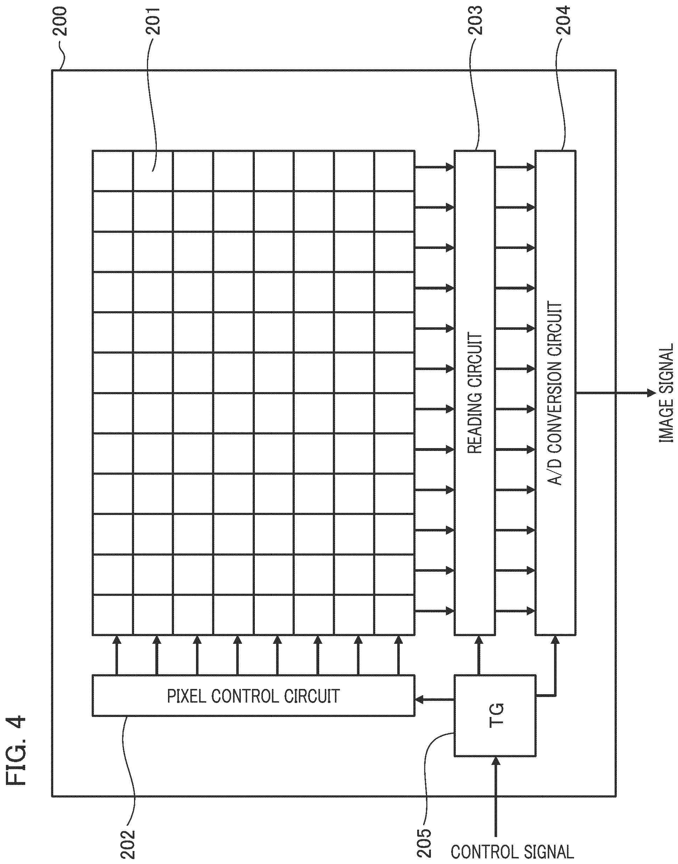

Fig. 4 is a block diagram illustrating a terahertz wave detection sensor 200 included in the camera unit 120 in the camera system 100 according to the present embodiment. The terahertz wave detection sensor 200 includes a pixel region 201, a pixel control circuit 202, a reading circuit 203, an A/D conversion circuit 204, and a timing generator (T/G) 205. The pixel control circuit 202, the reading circuit 203, the A/D conversion circuit 204, and the timing generator (T/G) 205 are included in a peripheral circuit region that is a region other than the pixel region 201.

In the pixel region 201, one or more pixels are arrayed in a matrix form (2-dimensional form). A control signal for driving each pixel disposed in the pixel region 201 is output from the pixel control circuit 202. In the reading circuit 203, a column amplifier, a correlation double sampling (CDS) circuit, and the like are provided, and noise cancellation correction, signal amplification, and the like are performed on pixel signals read via a signal reading line from pixels of a column selected by the pixel control circuit 202. The A/D conversion circuit 204 converts the pixel signals that are analog signals from the reading circuit 203 into digital signals. The timing generator (T/G) 205 receives a synchronization signal or a control signal such as a clock signal from an external controller (not illustrated) and outputs the control signal for driving the pixel control circuit 202, the reading circuit 203, and the A/D conversion circuit 204.

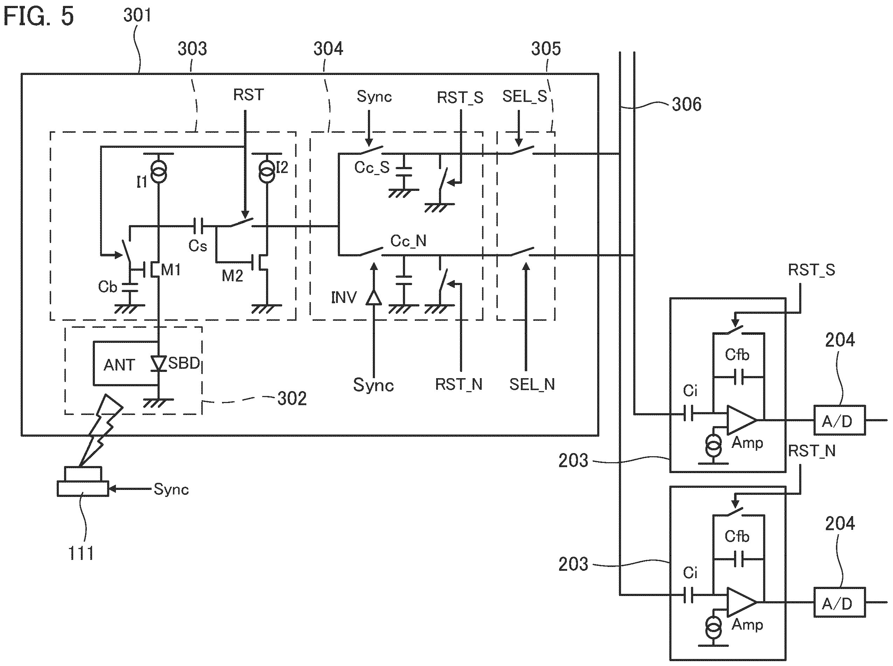

Fig. 5 is a diagram illustrating a pixel circuit 301 included in each pixel of the pixel region 201. The pixel circuit 301 includes a terahertz wave detection unit 302, a signal amplifier unit 303, a signal storage unit 304, and a selection unit 305.

The terahertz wave detection unit 302 detects the terahertz waves and generates a voltage signal. Fig. 5 illustrates an example in which a Schottky barrier diode (SBD) is used as the terahertz wave detection unit 302. When the SBD receives the terahertz waves, a current flows in accordance with intensity of the terahertz waves and an inter-terminal voltage of the diode SBD is changed, and then the terahertz wave detection unit 302 can generate a voltage signal in accordance with the intensity of the terahertz waves.

The terahertz waves are emitted from the radiation unit 110 that includes a terahertz light source. ON/OFF of emission of the terahertz light source is controlled with a control signal Sync. The control signal Sync is generated by a control unit (not illustrated) or an external controller (not illustrated) and is input to the terahertz light source. Alternatively, the control signal Sync may be generated by the timing generator (T/G) 206 of the terahertz wave detection sensor 200.

The signal amplifier unit 303 amplifies the voltage signal detected by the terahertz wave detection unit 302 and inputs the amplified voltage signal to the signal storage unit 304. The voltage signal detected by the terahertz wave detection unit 302 may be input to the signal storage unit 304 as it is, but the side amplifying the signal can improve S/N because an influence of noise in a circuit after the signal storage unit 304 is inhibited. As the signal amplifier unit 303, a common-gate amplifier circuit or a common-source amplifier circuit is used as appropriate.

In an example of Fig. 5, an output of the terahertz wave detection unit 302 is connected to a source terminal of an NMOS transistor M1 and a current source I1 is connected to a drain terminal of the NMOS transistor M1. A switch is connected between a gate terminal and the drain terminal of the NMOS transistor M1. By turning on the switch to short the gate terminal and the drain terminal, the gate terminal is reset to a voltage determined in accordance with a current flowing in the NMOS transistor M1.

The reset voltage depends on a threshold voltage or drive capability of the NMOS transistor M1 and operates to cancel a variation in the NMOS transistor M1 for each pixel. A bias capacitance Cb is connected to the gate terminal of the NMOS transistor M1 and operates so that the reset voltage is maintained when the switch is turned off. This circuit connection of the NMOS transistor M1 configures a common-gate amplifier circuit that has the source terminal of the NMOS transistor M1 as an input terminal and the drain terminal as an output terminal.

The source of the NMOS transistor M1 is connected to the anode of the diode SBD in the terahertz wave detection unit 302, and a current of the current source I1 is used as a drive current of the diode SBD. In this configuration, the current is used for both a bias current of the NMOS transistor M1 of the common-gate amplifier circuit and a drive current of the diode SBD, and thus a current consumed by the pixel circuit 301 can be reduced.

The drain terminal of the NMOS transistor M1 is connected to a gate terminal of an NMOS transistor M2 via a capacitance Cs. A source terminal of the NMOS transistor M2 is connected to a ground potential and a drain terminal of the NMOS transistor M2 is connected to a current source I2. A switch is connected between the gate terminal and the drain terminal of the NMOS transistor M2. By turning on the switch to short the gate terminal and the drain terminal, the gate terminal is reset to a voltage determined in accordance with a current flowing in the NMOS transistor M2. The reset voltage depends on a threshold voltage or drive capability of the NMOS transistor M2 and operates to cancel a variation in the NMOS transistor M2 for each pixel.

This circuit connection of the NMOS transistor M2 configures a common-gate amplifier circuit that has the gate terminal of the NMOS transistor M2 as an input terminal and the drain terminal as an output terminal. Accordingly, an output from the common-gate amplifier circuit by the NMOS transistor M1 is inverted and amplified by the common-source amplifier circuit using the NMOS transistor M2.

The signal amplifier unit 303 may be able to amplify the voltage signal from the terahertz wave detection unit 302, and an amplifier circuit other than the common-gate amplifier circuit or the common-source amplifier circuit described in the present embodiment can also be applied.

An output of the signal amplifier unit 303 is input to the signal storage unit 304. A high-frequency cutoff filter (not illustrated) may be disposed in an output unit of the signal amplifier unit 303 to remove noise of a signal from the signal amplifier unit 303. As the high-frequency cutoff filter, for example, a capacitance can be used and is connected between a fixed potential and the output unit of the signal amplifier unit 303. A plurality of capacitances may be switched with a selection switch to change a filter cutoff frequency.

The signal storage unit 304 that is synchronized with the control signal Sync is configured to store an output voltage signal at a timing at which the terahertz light source is turned on and an output voltage signal at a timing at which the terahertz light source is turned off. In the example of Fig. 5, an output of the signal amplifier unit 303 is connected to storage capacitances Cc_S and Cc_N in the signal storage unit 304. The other ends of the storage capacitances Cc_S and Cc_N are connected to the ground potential. The connection to the storage capacitances Cc_S and Cc_N is switched by a switch and is synchronized with the control signal Sync. That is, the output voltage signal at the timing at which the terahertz light source is turned on is stored in the storage capacitance Cc_S, and the output voltage signal at the timing at which the terahertz light source is turned off is stored in the storage capacitance Cc_N.

When a selection signal SEL is input, the selection unit 305 operates to output voltages of the storage capacitances Cc_S and Cc_N in the signal storage unit 304 as pixel signals to the signal reading line 306. The outputs of the pixel circuits 301 in the same column disposed in the pixel region 201 are commonly connected to the signal reading line 306. The pixel circuit 301 is sequentially selected for each row by the selection unit 305 to output a pixel signal.

The signal reading line 306 is connected to the reading circuit 203. The reading circuit 203 includes two amplifier circuits Amp, two input capacitances Ci, two feedback capacitances Cfb, and two switches for S and N signals for each column. The signal reading line 306 is connected to a first input terminal of the amplifier circuit Amp via the input capacitance Ci. The feedback capacitance Cfb is connected between the first input terminal and an output terminal of the amplifier circuit Amp. The switch is turned on to connect two terminals of the feedback capacitance Cfb for resetting. The fixed potential is input to a second input terminal of the amplifier circuit Amp. In this configuration of the reading circuit 203, noise can be canceled from the pixel signal to amplify the pixel signal.

An output of the reading circuit 203 is input to the A/D conversion circuit 204 and the pixel signal that is an analog signal from the reading circuit 203 is converted into a digital signal. The A/D conversion circuit 204 may be included for each column or one A/D conversion circuit 204 may be disposed in all the columns to perform A/D conversion in a time division manner for each column.

The camera unit 120 acquires first and second signals based on the control signal Sync output in synchronization with the radiation unit 110 and the camera unit 120. In the signal processing unit 140, the first image for detecting a concealed article and the second image for detecting a feature of an inspection target are generated using the S and N signals read from the terahertz wave detection sensor 200.

Specifically, the signal processing unit 140 acquires a difference by subtracting the N signal from the S signal. That is, the difference is acquired by comparing the S signal with the N signal. Thereafter, the signal processing unit 140 generates the first image based on the acquired difference and generates the second image from the N signal. When the first or second image is generated, the signal processing unit 140 may perform an image correction process of changing lightness or contrast of the image by applying a digital gain or a gamma curve to at least one of the S and N signals. Alternatively, a noise reduction process of reducing noise may be performed by applying a lowpass filter or a bilateral filter.

An ON time and an OFF time of the control signal Sync are preferably substantially equal to each other. However, a duty ratio of the control signal Sync (a proportion of an ON time of emission by the terahertz light source) may be determined based on whether quality of the image is prioritized between the first and second images. When detection of a concealed article is prioritized, the duty ratio of the control signal Sync may be set to be high. When detection of a feature of a detection target is prioritized, the duty ratio of the control signal Sync may be set to be low. When the duty ratio of the control signal Sync is not 50%, a digital gain is preferably applied to at least one of the S and N signals in order to align a signal level difference due to a difference between the ON time and the OFF time during generation of the first image. That is, the signal processing unit 140 preferably applies the digital gain to at least one of the S and N signals during generation of the first image, depending on the difference between the ON time and the OFF time of the control signal.

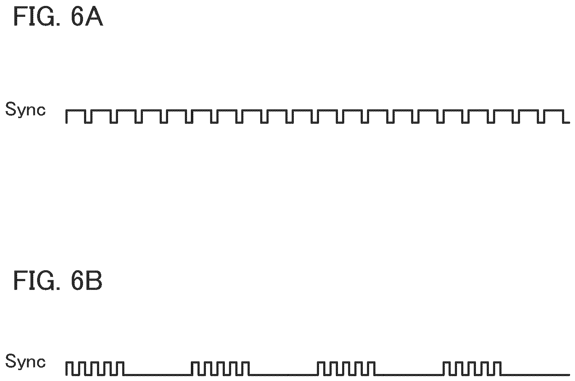

Figs. 6A and 6B are diagrams illustrating a variation in the control signal Sync. For example, when the duty ratio of the control signal Sync is 75% as in Fig. 6A, the ON time of emission by the terahertz light source is three times the OFF time. Therefore, it is preferable to generate the first image by subtracting a signal by applying a signal with three times the gain applied to the N signal from the S signal.

Further, as illustrated in Fig. 6B, the signal processing unit 140 may change a signal to be acquired according to a purpose by separating a period in which the difference between the S and N signals is acquired and a period in which the N signal is acquired. For example, the feature of the detection target may be detected by first acquiring only the N signal. Thereafter, a concealed article may be intensively detected by acquiring the difference between the S and N signals.

When the camera system 100 is configured to be movable manually or automatically, the terahertz light source is turned off to ascertain which location is captured in the detection target during an operation of the camera. It is preferable to switch between ON and OFF of the terahertz light source at a high speed in order to detect the concealed article during stopping of the camera. Alternatively, in a case where the camera system 100 includes a switch switching between acquisition of the difference between the S and N signals and acquisition of the N signal, it is preferable to switch ON and OFF of the terahertz light source at a high speed only when the user turns on the switch.

As illustrated in Fig. 2, the camera system 100 may include the display device (display unit) 180 that displays the first and second images generated by the signal processing unit 140. In this case, at least one of the first and second images generated by the signal processing unit 140 is displayed on a screen of the display device 180. The first and second images may be displayed separately on the screen of the display device 180 or may each be displayed on the same screen so that the images do not overlap each other. A third image obtained by composing the first and second images may be displayed on the screen of the display device 180.

The signal processing unit 140 generates the third image by composing the first and second images. A control unit or the CPU 11 (not illustrated) included in the camera system 100 may perform a process of displaying and controlling the first and second images or the third image that is the composite image on the display device 180. In this case, the control unit or the CPU 11 also functions as a display control unit.

When the third image that is the composite image is displayed on the display device 180, the signal processing unit 140 may change a composite ratio depending on a region of the composite image. For example, since an output of the first image is higher than that of the second image in only a region where there is a concealed article, the feature of the detection target and the concealed article can be displayed simultaneously by performing comparative brightness composition. When only the N signal is first acquired and the difference between the S and N signals is subsequently acquired, the difference between the S signal and the N signal weakened at any ratio may be calculated. In this case, by generating the first image based on the calculated difference, it is possible to generate an image equivalent to the third image by omitting the generation of the second image. In this way, instead of subtracting the N signal by 100%, the N signal is subtracted after being weakened to 50% of the signal value. Accordingly, it is possible to prevent deterioration in visibility of a concealed article because signals of the terahertz waves 111 are buried in the signals of the terahertz waves 112 and retaining the feature of the inspection target. By doing this, since the process of generating the second image or the process of generating the third image can be skipped, a processing speed and processing efficiency are advantageous in the signal processing unit 140.

Alternatively, the user may be allowed to select a composition ratio depending on a region. It is preferable to increase a composition ratio of the first image in a region where detection accuracy of a concealed article is desired to be increased, and it is preferable to increase a composition ratio of the second image in a region in which the feature of the inspection target is desired to be detected. At this time, it is further preferable to change intensity of a lighting element depending on a region of the composite image. That is, by arranging light emitting devices in an array form to configure the lighting element, strengthening the intensity of the light emitting device radiating a concealed article, and weakening the intensity of the light emitting device radiating a region other than the concealed article, it is possible to improve detection accuracy of the concealed article and detection accuracy of a feature of a subject together. The intensity of the light emitting devices may be changed by the signal processing unit 140 or the control unit or the like (not illustrated) or the user may change and input the intensity of the light emitting devices using the input device 170 or the like.

When the third image obtained by composing the first and second images is displayed on the display device 180, the signal processing unit 140 may perform image processing on the first or second image and compose the third image based on the first and second images subjected to the image processing. For example, to display the feature of the detection target without deteriorating the visibility of the concealed article, the composition may be performed after contour extraction is performed on the second image. To perform the contour extraction, image processing may be performed with a Sobel filter.

When the first and second images are displayed on the display device 180, the first and second images may be switched and displayed temporally. For example, the first and second images may be displayed respectively at timings at which the S and N signals are acquired with the control signal Sync. Alternatively, the first and second images may be displayed on the display device 180 by using the composition and the temporal switching in combination.

When the first and second images are displayed on the display device 180, at least one of the first and second images may be highlighted and displayed. Here, a blinking image is conspicuous because of visual characteristics of the human eyes. Therefore, by displaying the second image and superimposing the first image while blinking the first image, it is possible to capture the feature of the inspection target while focusing on a concealed article. The image may be displayed on the display device 180 by adding color to a part or all of at least one of the first and second images or adding an arrow, a circle, a rectangular frame, or the like to a portion of interest. Further, when the third image that is a composite image of the first and second images, the third image may also be highlighted and displayed on the display device 180. By highlighting the image in this way and subsequently displaying the image on the display device 180, the user can more easily confirm the image.

### Second Embodiment

A camera system 100 according to a second embodiment is different from the camera system 100 according to the first embodiment in only a pixel circuit of a terahertz wave detection sensor 200 included in a camera unit 120. Therefore, description of the same configurations or the like as those of the first embodiment will be omitted and configurations according to the second embodiment will be described below.

In the camera system 100 according to the first embodiment, the S and N signals are acquired in the terahertz wave detection sensor 200, and the signal processing unit 140 generates the difference between the S and N signals. In the camera system 100 according to the second embodiment, however, a terahertz wave detection sensor 400 acquires two of a difference between the S and N signals and the N signal. The signal processing unit 140 generates a first image based on the difference between the S and N signals acquired by the camera unit 120 and generates a second image based on the N signal. In this way, to reduce noise, it is preferable to directly acquire the difference between the S and N signals in the sensor than to generate the difference between the S and N signals in the signal processing unit 140.

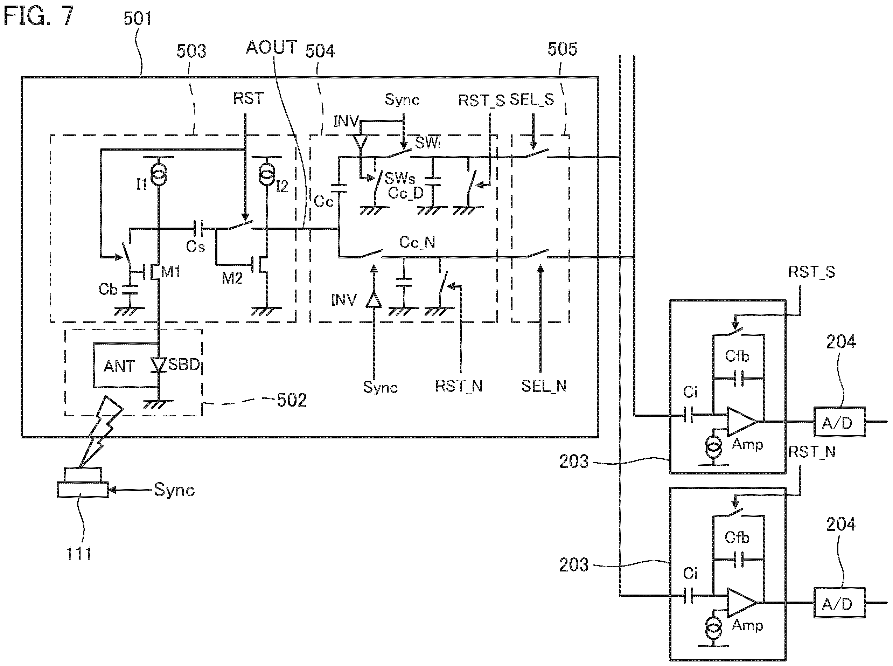

Fig. 7 illustrates an example of a pixel circuit 501 included in each pixel of a pixel region 401 of the terahertz wave detection sensor 400 according to the second embodiment. The pixel circuit 501 includes a terahertz wave detection unit 502, a signal amplifier unit 503, a signal storage unit 504, and a selection unit 505. Since the units other than the signal storage unit 504 are the same as those of the pixel circuit 301 illustrated in Fig. 5, description thereof will be omitted.

The signal storage unit 504 is synchronized with the control signal Sync and is configured to store a difference between an output voltage signal at an ON timing of the terahertz light source and an output voltage signal at an OFF timing of the terahertz light source, and the output voltage signal at the OFF timing. Since the circuit storing the output voltage signal at the OFF timing is the same as the configuration illustrated in Fig. 5, description thereof will be omitted.

On the other hand, a circuit that stores the difference between the output voltage signal at the ON timing of the terahertz light source and the output voltage signal at the OFF timing of the terahertz light source is different from the circuit of Fig. 5. Specifically, a difference voltage signal between an output voltage signal from the signal amplifier unit 503 at a certain timing and an output voltage signal from the signal amplifier unit 503 at a timing different from the timing is generated. An operation of storing a voltage determined from the difference voltage signal is performed and an integration operation is performed by repeating the operation.

In the example of Fig. 7, an output of the signal amplifier unit 503 is connected to one end of a clamp capacitance Cc in the signal storage unit 504. The other end of the clamp capacitance Cc is commonly connected to one end of a switch SWs and one end of a switch SWi. The other end of the switch SWs is connected to a fixed potential (a ground potential in Fig. 7). The other end of the switch SWi is connected to one end of a storage capacitance Cc_D. The other end of a storage capacitance Co is connected to a fixed potential (the ground potential in Fig. 7). One end of a switch SWrst is connected to one end of the storage capacitance Co. The other end of the switch SWrst is connected to a fixed potential (the ground potential in Fig. 7). The one end of the storage capacitance Cc_D is an output of the signal storage unit 504 and is input to the selection unit 505.

The switch SWi is controlled to be turned on or off with a control signal SPCLK. The switch SWs is controlled with an inversion signal of the control signal SPCLK. That is, when the switch SWi is turned on, the switch SWs is turned off. In contrast, when the switch SWs is turned on, the switch SWi is turned off. When ON and OFF of the switches SWi and SWs are switched, it is preferable to drive the switches so that a period in which both the switches SWi and SWs are turned on does not occur and a period in which both the switches SWi and SWs are turned off occurs.

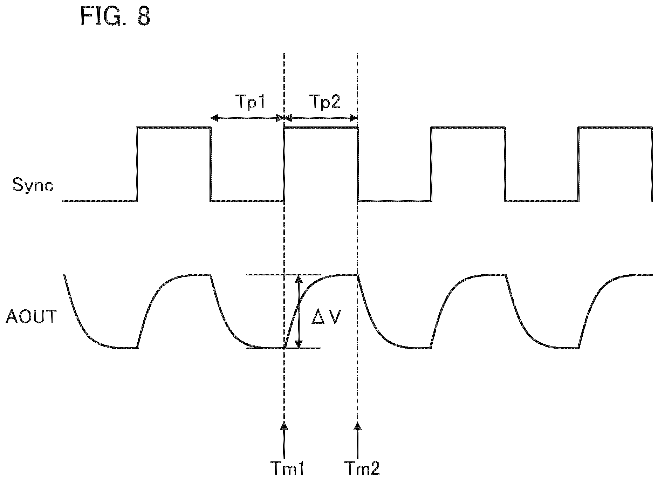

An operation of the circuit that stores the difference between the output voltage signal at the ON timing of the terahertz light source and the output voltage signal at the OFF timing of the terahertz light source will be described with reference to a timing chart illustrated in Fig. 8. Fig. 8 is a timing chart illustrating a terahertz wave detection sensor according to the second embodiment.

An output waveform AOUT is an output voltage signal of the signal amplifier unit 303. A rise and a fall of the output waveform AOUT are interlocked with ON and OFF of emission of the terahertz light source. The terahertz light source emits light when the control signal Sync is at an H level. Therefore, the terahertz wave detection unit 302 detects the terahertz waves and generates a voltage signal, and the signal amplifier unit 303 amplifies and outputs the voltage signal.

Accordingly, when the control signal Sync enters the H level, the output waveform AOUT rises and a voltage increases up to a level appropriate for the intensity of the terahertz waves. When the control signal Sync is at an L level, the emission of the terahertz light source is turned off. Therefore, the terahertz wave detection unit 302 does not detect the terahertz waves, the output waveform AOUT falls, and the voltage decreases up to an output level at which the emission of the terahertz waves is turned off.

In the present embodiment, a period in which the control signal SPCLK is at the L level is referred to as a first period TP1 and a period in which the control signal SPCLK is at the high level is referred to as a second period Tp2. A timing at which the first period Tp1 is switched to the second period Tp2 is referred to as a first timing Tm1 and a timing at which the second period Tp2 is switched to the first period Tp1 is referred to as a second timing Tm2.

First, a first operation performed during the first period Tp1 will be described. Since the control signal Sync is at the L level during the first period Tp1, the emission of the terahertz light source is turned off and the output waveform AOUT also decreases. The output waveform AOUT at the time of turning off the emission of the terahertz light source is applied to the one end of the clamp capacitance Cc and the switch SWs is turned on. Therefore, the fixed potential (ground potential) is applied to the other end of the clamp capacitance Cc.

When the control signal SPCLK is switched from the L level to the H level at the first timing Tm1, the switch SWs is turned off and the switch SWi is turned on. Therefore, the other end of the clamp capacitance Cc is connected to the one end of the storage capacitance Cc_D. As an inter-terminal voltage of the clamp capacitance Cc, a potential difference between the voltage signal (first voltage signal) and the fixed voltage (ground potential) of the output waveform AOUT at the first timing Tm1 is maintained.

Next, a second operation performed during the second period Tp2 will be described. Since the control signal Sync is at the H level during the second period Tp2, the terahertz light source emits light and the output waveform AOUT increases. Since the output waveform AOUT is applied to the one end of the clamp capacitance Cc and the one end of the storage capacitance Cc_D is connected to the other end of the clamp capacitance Cc, a voltage of the storage capacitance Cc_D also increases as the voltage of the output waveform AOUT increases. Here, ΔV is a voltage increment of the output waveform AOUT. In this case, a voltage increment ΔV' of the storage capacitance Cc_D (hereinafter referred to as a storage voltage ΔV') is multiplied by a capacitance division ratio of the clamp capacitance Cc and the storage capacitance Cc_D to be expressed as ΔV'=ΔV×Cc/(Cc_D+Cc), and thus becomes a voltage value with correlation with ΔV. Here, Cc is a capacitance value of the clamp capacitance Cc and Cc_D is a capacitance value of the storage capacitance Co.

When the control signal SPCLK is switched from the H level to the L level at the second timing Tm2 and the switch SWi connected to the clamp capacitance Cc and the storage capacitance Cc_D is turned off, the voltage increment ΔV is confirmed. When the voltage signal of the output waveform AOUT at the second timing Tm2 is set to the second voltage signal, the voltage increment ΔV becomes a difference voltage signal between the first and second voltage signals.

In this way, the terahertz wave detection sensor 400 included in the camera unit 120 can acquire a difference between the second voltage signal, that is, the S signal, and the first voltage signal, that is, the N signal.

In the configuration of the camera system 100 according to the second embodiment, the difference between the S and N signals can be acquired directly in the signal storage unit 504. Therefore, it is possible to improve quality of the first signal. In particular, the configuration of the camera system 100 according to the second embodiment is preferable since the quality of the first signal can be improved by performing transmission of the signal storage unit 504 from the signal amplifier unit 503 a plurality of times.

The preferred embodiments of the present disclosure have been described above. The present disclosure is not limited to the embodiments and various modifications and changes can be made within the scope of the gist of the present disclosure.

The present disclosure can be embodied through a process of supplying a program that realizes one or more functions of the above-described embodiments to a system or a device via a network or a storage medium and causing one or more processors in a computer of the system or the device to read the program. The present disclosure can also be embodied by a circuit (for example, an ASIC) that realizes one or more functions.

While the present disclosure has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2024-008927, January 24, 2024, which is hereby incorporated by reference wherein in its entirety.

## Claims

1. A camera system comprising:
a radiation unit configured to radiate terahertz waves;
a camera unit configured to acquire a first signal at a timing at which the terahertz waves are radiated by the radiation unit and acquire a second signal different from the first signal at a timing at which the terahertz waves are not radiated by the radiation unit; and
a signal processing unit configured to generate an image from the first and second signals acquired by the camera unit,
wherein the camera unit or the signal processing unit acquires a difference between the first and second signals, and
wherein the signal processing unit generates a first image from the difference between the first and second signals and generates a second image different from the first image from the second signal.

2. The camera system according to claim 1, wherein the camera unit acquires the first and second signals based on a control signal output in synchronization with the radiation unit and the camera unit.

3. The camera system according to claim 2, wherein ON and OFF times of the control signal are equivalent to each other.

4. The camera system according to claim 1, wherein the signal processing unit applies a digital gain or a gamma curve to at least one of the first and second signals when the signal processing unit generates the first image.

5. The camera system according to claim 1, wherein the signal processing unit applies a lowpass filter or a bilateral filter to at least one of the first and second signals when the signal processing unit generates the first image.

6. The camera system according to claim 1, wherein the signal processing unit separately acquires a period in which the difference between the first and second signals is acquired and a period in which the second signal is acquired.

7. The camera system according to claim 1, wherein the signal processing unit generates a third image by composing the first and second images.

8. The camera system according to claim 7,
wherein the radiation unit includes a plurality of light emitting devices arranged in an array form, and
wherein the signal processing unit changes emission intensity of the light emitting device and the ratio of the first and second images according to the area of the combined image.

9. The camera system according to claim 1, further comprising a display device configured to display at least one of the first and second images generated by the signal processing unit.

10. The camera system according to claim 1, further comprising a display control unit configured to cause a display device to display at least one of the first and second images generated by the signal processing unit.

11. The camera system according to claim 10,
wherein the signal processing unit generates a third image obtained by composing the first and second images, and
wherein the display control unit causes a display device to display the generated third image.

12. The camera system according to claim 10, wherein the display control unit temporally switches between the first and second images and causes the display device to display the first and second images.

13. The camera system according to claim 10, wherein the display control unit highlights and displays at least one of the first and second images when the display control unit causes the display device to display the first and second images.

14. A method of controlling a camera system, the method comprising:
radiating terahertz waves;
acquiring a first signal at a timing at which the terahertz waves are radiated and acquiring a second signal different from the first signal at a timing at which the terahertz waves are not radiated;
acquiring a difference between the first and second signals; and
generating a first image from the difference between the first and second signals and generating a second image different from the first image from the second signal.

15. A non-transitory computer-readable storage medium configured to store a computer program comprising instructions for executing following processes comprising:
radiating terahertz waves;
acquiring a first signal at a timing at which the terahertz waves are radiated and acquiring a second signal different from the first signal at a timing at which the terahertz waves are not radiated;
acquiring a difference between the first and second signals; and
generating a first image from the difference between the first and second signals and generating a second image different from the first image from the second signal.
